# EUROPEAN PATENT APPLICATION

(11) **EP 4 099 056 A1**
(43) Date of publication of application: **07.12.2022**
(21) Application number: 22179054.6
(22) Date of filing: 07.10.2016
(51) Int. Cl.: G01S 13/931, G01S 7/02, G01S 13/34, G01S 13/87

(54) **A VEHICLE RADAR SYSTEM ARRANGED FOR INTERFERENCE REDUCTION**

(62) Divisional of application: 16192837.9
(71) Applicant: Arriver Software AB, 583 30 Linköping (SE)
(72) Inventor: MOSS, Jonathan, 85778 Haimhausen (DE); ANDREAS, Lefevre, 97717 Euerdorf (DE)
(74) Representative: Loveless, Ian Mark

(57) **Abstract**

The present disclosure relates to vehicle radar system (3) comprising at least one transceiver arrangement (10a, 10b) and at least one control unit (29). Each transceiver arrangement (10a, 10b) is arranged for generating and receiving FMCW (Frequency Modulated Continuous Wave) chirp signals in a radar frequency band, comprising ramps (r₁, r₂) that each has a start frequency (fₛₜₐᵣₜ) and a stop frequency (fₛₜₒₚ). Said control unit (29) is arranged to:
Control at least one transceiver arrangement (10a, 10b) to monitor a certain part of the radar frequency band during an observation period.

Analyze possible interference signals (28, 5c).

Identify a certain start time (t₂ₛₜₐᵣₜ) to start sending a cycle of one or more chirp signals (4a, 4b) in dependence of said analysis, such that interference from said interference signals (28, 5c) is reduced.

The present disclosure also relates to a corresponding method.

## Description

### DESCRIPTION OF THE DISCLOSURE

The present disclosure relates to a vehicle radar system comprising at least one transceiver arrangement and at least one control unit. Each transceiver arrangement is arranged for generating FMCW (Frequency Modulated Continuous Wave) chirp signals.

Many vehicle radar systems comprise means for generating so-called chirp signals that are transmitted, reflected and received by means of appropriate antennas comprised in the radar system. A chirp signal is an FMCW (Frequency Modulated Continuous Wave) signal with a certain amplitude where the frequency is continuously ramped between two values, the chirp signal thus being in the form of a continuous sinusoid where the frequency varies from a first low frequency to a second high frequency over the course of the ramp.

The received signals, thus constituted by reflected radar echoes, are mixed with the transmitted chirp signal in order to convert the received signals to baseband signals. These baseband signals, or IF (Intermediate Frequency) signals, are amplified and transferred in a plurality of channels to an Analog Digital Converter (ADC) arrangement which is arranged to convert the received analog signals to digital signals. The digital signals are used for retrieving an azimuth angle of possible targets by simultaneously sampling and analyzing phase and amplitude of the received signals. The analysis is generally performed in one or more Digital Signal Processors (DSP:s) by means of Fast Fourier Transform (FFT) processing.

When a vehicle comprises two radar transceivers with an overlapping field of view, for example two radar transceivers located at the front corners of a vehicle, a transmitted signal from one radar transceiver is reflected at an object and is received by the other radar transceiver. Depending on the receiving timings, this may cause erroneous detections.

Other interfering factors comprise external interfering irradiations, where radiation of radar systems of other vehicles also may cause erroneous detections.

Interference of these kinds may severely disturb the function of a safety devices in the vehicle, such as for example automatic braking systems, as well as driver assistance systems.

Especially when two FMCW ramps are transmitted at roughly the same time at the two radar transceivers, the risk of erroneous detections increases, and it is thus desired to keep the ramps of the two radar transceivers separated in time. This may for example be done by means of randomized starting times for each cycle of corresponding ramps of the two radar transceivers.

US 2010/085233 discloses varying one of different parameters; for example a time between transmitted frequency ramps, ramp start time, ramp frequency and sign of ramp slope. This approach does, however, not reduce the effect of interfering signals to a sufficient degree.

It is desirable for a radar system to act autonomously, avoiding interference without the need for an accurate, high bandwidth timing signal.

The object of the present disclosure is thus to provide a vehicle radar system which is arranged for providing an improved reduction of the effect of interfering signals and thus an improved reduction of erroneous detections.

This object is obtained by means of a vehicle radar system comprising at least one transceiver arrangement and at least one control unit. Each transceiver arrangement is arranged for generating and receiving FMCW (Frequency Modulated Continuous Wave) chirp signals in a radar frequency band, comprising ramps that each has a start frequency and a stop frequency. Said control unit is arranged to:
- Control at least one transceiver arrangement to monitor a certain part of the radar frequency band during an observation period.
- Analyze possible interference signals.
- Identify a certain start time to start sending a cycle of one or more chirp signals in dependence of said analysis, such that interference from said interference signals is reduced.

This object is also obtained by means of a method for a vehicle radar system used for generating and receiving FMCW (Frequency Modulated Continuous Wave) chirp signals in a radar frequency band comprising ramps that each has a start frequency and a stop frequency. The method comprises:
- Monitoring a certain part of a radar frequency band during an observation period.
- Analyzing possible interference signals.
- Identifying a certain start time to start sending a cycle of one or more chirp signals in dependence of said analysis, such that interference from said interference signals is reduced.

According to an example, said control unit is arranged to also control the start frequency and the stop frequency for ramps in one or more chirp signals in dependence of said analysis.

According to another example, said certain part of the radar frequency band corresponds to the start frequency with the addition of a difference frequency.

According to another example, the vehicle radar system is arranged to monitor timing of control signals received from a vehicle data bus or said control unit in order to derive a frequency reference.

Other examples are disclosed in the dependent claims.

An FMCW radar receiver is here configured to predict the timing of other FMCW radar chirp signals, and to ensure that transmitted chirps are offset. This technique can be further enhanced by accurate timing analysis of a low-rate in-coming control signal to the radar from a central controller.

A number of advantages are obtained by means of the present disclosure. Mainly, the risk of erroneous detections is reduced compared to prior art.

### BRIEF DESCRIPTION OF THE DRAWINGS

The present disclosure will now be described more in detail with reference to the appended drawings, where:
- Figure 1: shows a schematic top view of a vehicle;
- Figure 2: shows a simplified schematic of a vehicle radar system;
- Figure 3a: shows a first chirp signal;
- Figure 3b: shows a second chirp signal;
- Figure 4: shows a schematic top view of two vehicles;
- Figure 5: shows two chirp signals where one is delayed; and
- Figure 6: shows a flowchart for methods according to the present disclosure.

### DETAILED DESCRIPTION

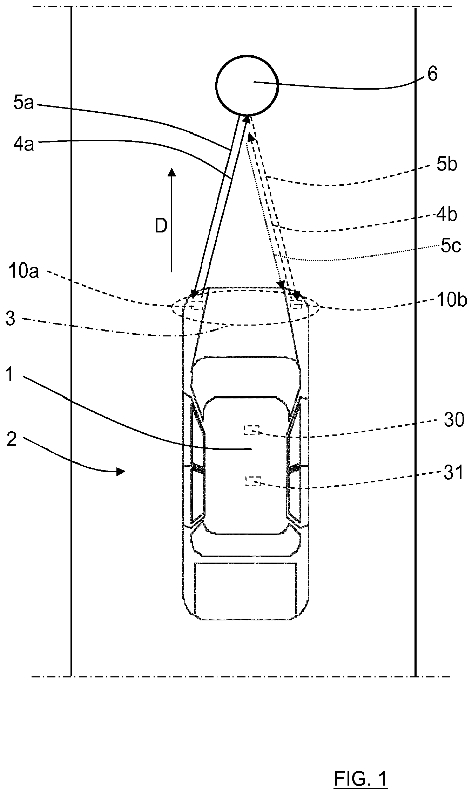

Figure 1 schematically shows a top view of a vehicle 1, constituting an ego vehicle 1, arranged to run on a road 2 in a direction D, where the ego vehicle 1 comprises a ego vehicle radar system 3 which is arranged to distinguish and/or resolve single targets from the surroundings by transmitting signals 4a, 4b and receiving reflected signals 5a, 5b and using a Doppler effect in a previously well-known manner. The ego vehicle radar system 3 is arranged to provide azimuth angles of possible objects 6 by simultaneously sampling and analyzing phase and amplitude of the received signals 5a, 5b.

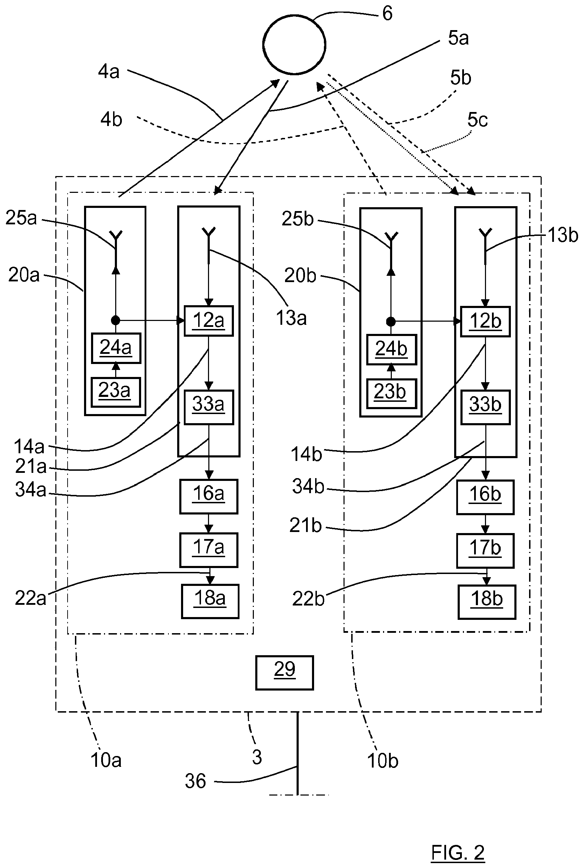

With reference also to Figure 2, the ego vehicle radar system 3 comprises a first transceiver arrangement 10a and a second transceiver arrangement 10b, each transceiver arrangement 10a, 10b being arranged for generating sweep signals in the form of FMCW, Frequency Modulated Continuous Wave, chirp signals of a previously known kind. The first transceiver arrangement 10a comprises a first transmitter 20a, a first receiver 21a, a first Analog to Digital Converter (ADC) arrangement 16a, a first sampling and timing arrangement 17a and a first DSP (Digital Signal Processor) arrangement 18a. The second transceiver arrangement 10b comprises a second transmitter 20b, a second receiver 21b, a second ADC arrangement 16b, a second sampling and timing arrangement 17b and a second DSP arrangement 18b.

The ego vehicle radar system 3 also comprises at least one control unit 29, here shown outside the transceiver arrangements 10a, 10b. There may of course be one or more control units comprised in one or more of the transceiver arrangements 10a, 10b as well, or as an alternative.

The first transmitter 20a comprises a first oscillator 23a, a first signal generator 24a and a first transmit antenna arrangement 25a. The second transmitter 20b comprises a second oscillator 23b, a second signal generator 24b and a second transmit antenna arrangement 25b.

The first receiver 21a comprises a first receiver mixer 12a and a first receiver antenna arrangement 13a. The second receiver 21b comprises a second receiver mixer 12b and a second receiver antenna arrangement 13b.

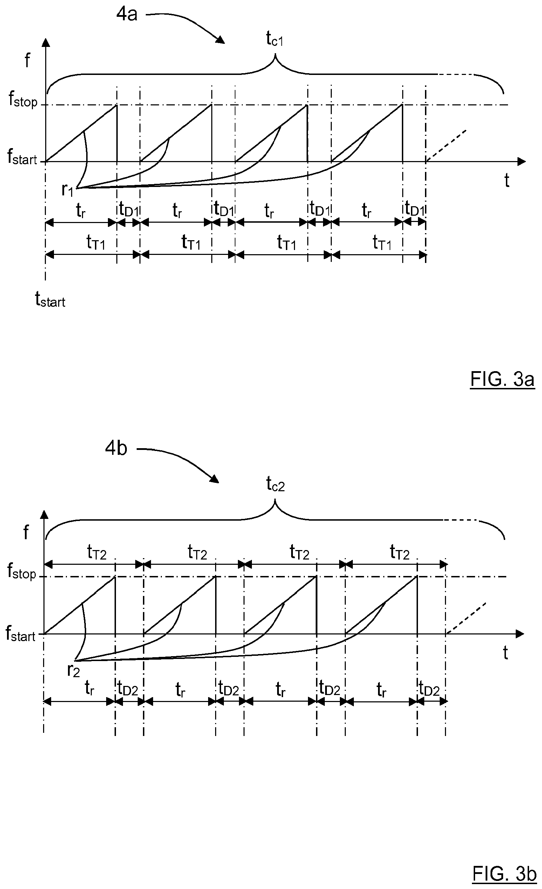

With reference also to Figure 3a and Figure 3b, the first transmitter 20a is arranged to transmit a first chirp signal 4a and the second transmitter 20b is arranged to transmit a second chirp signal 4b. The receivers 21a, 21b are arranged to receive reflected signals 5a, 5b, where the transmitted chirp signals 4a, 4b have been reflected by an object 6 as will be discussed more in detail below.

A chirp signal 4a, 4b is in the form of a continuous sinusoid where the frequency varies from a first frequency fₛₜₐᵣₜ to a second frequency fₛₜₒₚ over the course of a ramp, where the magnitude of the first frequency fₛₜₐᵣₜ falls below the magnitude of the second frequency fₛₜₒₚ. The change in frequency from start to finish for each ramp may for example be of the order of 0.5% of the first frequency fₛₜₐᵣₜ.

As shown in Figure 3a, the first chirp signal 4a comprises repeating cycles of a first plurality of frequency ramps r₁ and as shown in Figure 3b, the second chirp signal 4b comprises repeating cycles of a second plurality of frequency ramps r₂. As mentioned above, the frequency varies from a first frequency fₛₜₐᵣₜ to a second frequency fₛₜₒₚ over the course of each ramp r₁, r₂, where the magnitude of the first frequency fₛₜₐᵣₜ falls below the magnitude of the second frequency fₛₜₒₚ.

A cycle for the first chirp signal 4a lasts for a certain first cycle time t_{c1} and a cycle for the second chirp signal 4b lasts for a certain second cycle time t_{c2}. Each ramp lasts a certain ramp time tᵣ, the ramp time tᵣ being the same for the first chirp signal 4a and the second chirp signal 4b. The first chirp signal 4a has a first ramp period time t_{T1} and the second chirp signal 4b has a second ramp period time t_{T2}, the ramp period times t_{T1}, t_{T2} being the respective time between the starting of two consecutive ramps. Between two consecutive ramps of the first chirp signal 4a there is a first delay time t_{D1}, and between two consecutive ramps of the second chirp signal 4b there is a second delay time t_{D2}. In the case that the two radars are in the same vehicle, or from the same vendor/manufacturer, then typically t_{T1} = t_{T2}.

Referring back to Figure 2, a first transmitted signal 4a, indicated with a solid line, and a second transmitted signal 4b, indicated with a dashed line, are reflected at the object 6. The first transmitted signal 4a results in a first reflected signal 5a, indicated with a solid line, where the first reflected signal 5a is received by the first receiver 21a via the first antenna arrangement 13a. The second transmitted signal 4b results in a second reflected signal 5b, indicated with a dashed line, where the second reflected signal 5b is received by the second receiver 21b via a the second antenna arrangement 13b. The received signals 5a, 5b, thus constituted by reflected radar echoes, are mixed. In the first receiver 21a, the first received signal 5a is mixed with the first chirp signal 4a in the first receiver mixer 12a, and in the second receiver 21b, the second received signal 5b is mixed with the second chirp signal 4b in second receiver mixer 12b.

In this way, a corresponding first IF (Intermediate Frequency) signal 14a and second IF signal 14b is acquired and filtered in a corresponding first IF filter 33a and second IF filter 33b such that a first filtered IF signal 34a and a second filtered IF signal 34b is acquired.

The difference frequency of the filtered IF signals 34a, 34b relates to the target distance. The filtered IF signals 34a, 34b are transferred from the corresponding receiver 21a, 21b to the corresponding ADC arrangements 16a, 16b and sampling and timing arrangements 17a, 17b, where the respective IF signals 14a, 14b are sampled at a certain predetermined sampling frequency and converted to digital signals 22a, 22b. Each DSP arrangement 18a, 18b is adapted for radar signal processing of the digital signals 22a, 22b by means of a first FFT (Fast Fourier Transform) to convert the digital signals 22a, 22b to a range domain, and a second FFT to combine the results from successive chirp signal ramps into the Doppler domain in a previously known manner.

As shown in Figure 1 and Figure 2, the first transmitted signal 4a also results in a third reflected signal 5c, indicated with a dotted line, where the third reflected signal 5c is received by the second receiver 21b via the second antenna arrangement 13b. This third reflected signal 5c may cause erroneous detections which should be avoided. Although not shown, the second transmitted signal 4b may also result in reflected signals that are received by the first receiver 21a via the first antenna arrangement 13a. Such signals may also cause erroneous detections.

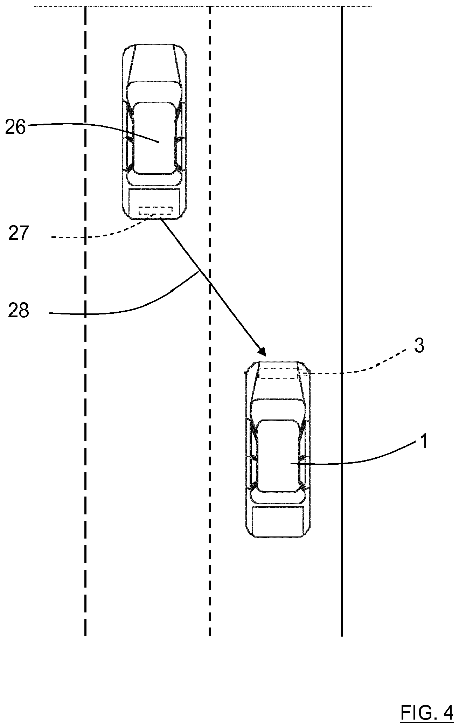

Furthermore, as shown in Figure 4, there is a further vehicle 26, constituting an interfering vehicle 26, where the interfering vehicle 26 comprises an interfering radar system 27. The interfering radar system 27 transmits an interfering radar signal 28, as indicated in Figure 4. Most probably, different radars systems from different manufacturers will use different parts of the band and different slopes.

According to the present disclosure, the control unit 29 is arranged to control the transceiver arrangements 10a, 10b to monitor a certain part of the radar frequency band for a relatively short period of time without transmitting, for an observation period; according to some aspects during the time of 2-4 ramps. The bandwidth of the certain part of the radar frequency band is suitably relatively narrow and is according to some aspects defined by the IF bandwidth of the receivers 21a, 21b.

By monitoring this narrow band during the observation period, with the transmitters 20a, 20b switched off, the ego vehicle radar system 3 is arranged to identify the best time to start sending a cycle of one or more chirp signals 4a, 4b in order to avoid interference, thus identifying a suitable start time.

The monitoring of said section of the radar frequency band may suitably be performed for either transceiver arrangement 10a, 10b if interference between the transceiver arrangements 10a, 10b is to be analyzed; and for both transceiver arrangements 10a, 10b at the same time if external interference 28 is to be analyzed.

In the following, the case with external interference will be discussed.

The monitoring of said section of the radar frequency band is suitably performed before or after a cycle of chirp signals 4a, 4b. If the monitoring is performed after a cycle of chirp signals 4a, 4b has completed, the result may be used for determining the best start-time of the next cycle of chirp signals 4a, 4b

In this example, the radar band is monitored before the cycles of chirp signals 4a, 4b have been transmitted for both transceiver arrangements 10a, 10b, i.e. with the intention to monitor external interference 28 as exemplified in Figure 4.

Firstly, the receiver frequency is set at a frequency fₛₜₐᵣₜ + Δ, where the difference frequency Δ is selected such that the frequency from the second transceiver arrangement 10b is detected even when the frequency references used to set start frequency in 4a and 4b are at their minimum and maximum tolerances. The ego vehicle radar system 3 is arranged to sample the received signals at a rate that may be the same or different to the normal radar sampling rate.

According to some aspects, in order to avoid the risk of an oscillator where there is too large frequency reference inaccuracies, the ego vehicle radar system 3 is also arranged to monitor the timing of control signals received from a vehicle data bus 36 or control unit 29 in order to derive as accurate timing and frequency accuracy as possible, thus treating these control signals as a frequency reference. According to some aspects, such a data bus 36 is constituted by a CAN (Controller Area Network) bus.

This can according to some aspects be accomplished by sending a message comprising a known sequence via the data bus 36, for example binary. This message can then be sampled by both transceiver arrangements 10a, 10b, e.g. using the same ADC hardware as they use for receiving the IF signal, which could thereby be used to create an accurate RF (Radio Frequency) frequency that then can be used to reduce the uncertainty of the difference frequency Δ.

While monitoring the channel, the interfering radar system 27 is detected by a burst of interference from the interference signal 28, and the timing is extracted. This burst of interference for example corresponds to the interfering radar system 27 transmitting within +/-10 MHz of the monitoring frequency. The interference signal 28 would then normally appear as a chirp signal starting at 10 MHz, reducing linearly to 0Hz then returning linearly to 10 MHz before disappearing due to IF filtering. It is to be noted that these frequencies, which also are used in the following, are not to be interpreted as limiting, but as examples provided for alleviating the understanding of the present disclosure.

The ego vehicle radar system 3 is now arranged to analyze the nature of the interference signal 28 in order to extract as much information as possible; for example:
- Depending on the rate of ramps from 10 MHz to 0 MHz and back to 10 MHz, the gradient of the interference signal 28 can be estimated. In the event that the ego vehicle radar system 3 comprises an I&Q demodulator (not shown), the polarity of the gradient of each ramp can also be determined.
- If it is known that the interference signal 28 is using the same signal frequency and timing as the ego vehicle radar system 3, then the difference frequency Δ can be selected such that the ego vehicle radar system 3 is enabled to observe that the interference signal 28 first is detected as a ramp at a frequency of 5 MHz, followed by a ramp to 0Hz and back to 10MHz, thus signifying the start of the interference signal 28. This would accurately identify the start-time of the interference signal 28, and also an RF (Radio Frequency) frequency offset.
- Estimate the time between chirps of the interference signal 28 such that a clock frequency can be acquired relative the own clock frequency. In the event that multiple interference signals are present, the relative signal levels can enable identifying which interference chirps that correspond to which interference signal 28.

The acquired information is used to avoid interference, where the control unit 29 is arranged to control the start time, and, according to some aspects, also control the start frequency fₛₜₐᵣₜ and stop frequency fₛₜₒₚ in order to match the gradient accordingly.

The interference that possibly could remain; was not avoided by means of the present disclosure, or was too weak to be detected directly, can be removed using an ADC repair approach, where for example the section of the signal 14b that experiences interference could be deleted.

The examples described above have been directed to a radar system comprising two transceiver arrangements 10a, 10b. The ego vehicle radar system 3 should comprise at least one transceiver arrangement in order to monitor external interference.

Internal interference between the transceiver arrangements 10a, 10b is handled in a similar manner, but here one transceiver arrangement is monitoring the received signals during an observation period corresponding to a monitoring time when the other transceiver arrangement is transmitting.

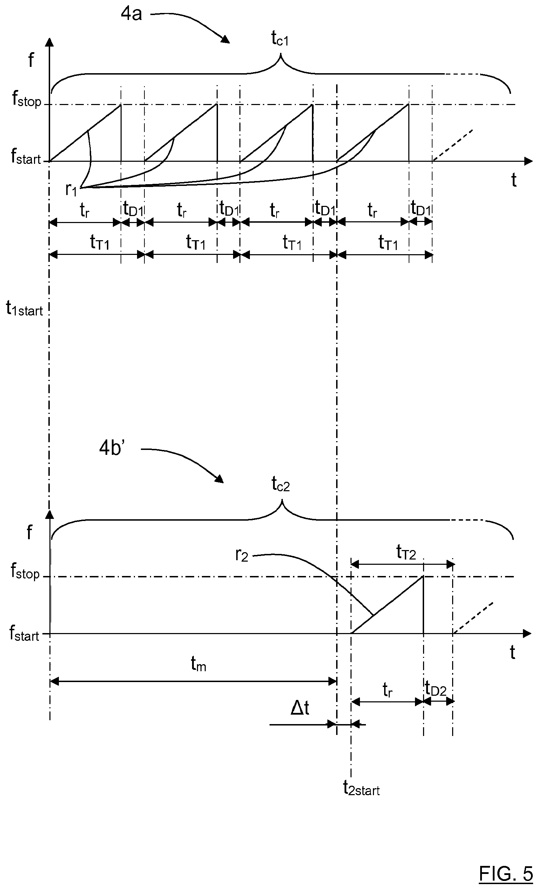

With reference to Figure 5, corresponding to Figure 3a and Figure 3b, the first transmitter 20a is arranged to transmit the first chirp signal 4a starting at a first start time t₁ₛₜₐᵣₜ while the second transmitter 20b is arranged to be deactivated for a certain monitoring time tₘ. During that monitoring time tₘ, the second receiver arrangement 21b is arranged to receive the internal interference 5c resulting from the first transmitter 20a. The ego vehicle radar system 3 is arranged to analyze the nature of the internal interference signal 5c in a manner corresponding to the one described for the external interference signal 28.

The acquired information is used to avoid interference, where the control unit 29 is arranged to control a second start time t₂ₛₜₐᵣₜ for the second chirp signal 4b' and, according to some aspects, also control the start frequency fₛₜₐᵣₜ and stop frequency fₛₜₒₚ. Here, the second chirp signal 4b' is transmitted with a second start time t₂ₛₜₐᵣₜ that is delayed a certain delay time Δt with respect to the start time of the nearest corresponding ramp of the first chirp signal 4a. There is thus a total delay for the second chirp signal 4b' relative the first chirp signal 4a that equals the monitoring time tₘ and the delay time Δt. It is to be noted that Figure 5 is to be interpreted in a to be schematical, for example the monitoring time tₘ includes a certain calculation time for determining the second start time t₂ₛₜₐᵣₜ.

In order to handle internal interference, the ego vehicle radar system 3 should comprise at least two transceiver arrangements, and generally, one transceiver arrangement should suitably be monitoring the received signals during an observation period while the other transceiver arrangements are transmitting. In a case of a plurality of transceiver arrangements, it is conceivable that only one transceiver arrangement or a few transceiver arrangements are transmitting at a time in order to obtain an improved analysis.

According to some aspects, as an alternative, a data bus signal can be used to derive an accurate timing signal to control when the transceiver arrangements 10a, 10b start their transmissions, and thus avoid the monitoring requirements. This means that a suitable delay time Δt can be set in an accurate manner, ensuring that there will be no internal interference between the transceiver arrangements 10a, 10b. The control unit 29 is then arranged to identify a certain time to start sending a cycle of one or more chirp signals 4a, 4b such that internal interference 5c is reduced. A timing signal derived from a data bus signal, such as a CAN bus signal, is then used to derive an accurate timing signal to control when the transceiver arrangements 10a, 10b start their transmissions as well as optionally acting as a frequency reference for the frequency chirp.

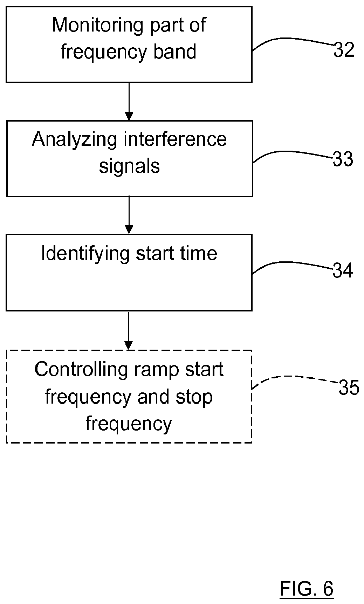

With reference to Figure 6, the present disclosure also relates to a method for a vehicle radar system 3 used for generating and receiving FMCW (Frequency Modulated Continuous Wave) chirp signals in a radar frequency band, comprising ramps r₁, r₂ that each has a start frequency fₛₜₐᵣₜ and a stop frequency fₛₜₒₚ. The method comprises:
32: Monitoring a certain part of a radar frequency band during an observation period.
33: Analyzing possible interference signals 28, 5c.
34: Identifying a certain start time t₂ₛₜₐᵣₜ to start sending a cycle of one or more chirp signals 4a, 4b in dependence of said analysis, such that interference from said interference signals 28, 5c is reduced.

According to an example, the method further comprises
35: Controlling the start frequency fₛₜₐᵣₜ and the stop frequency fₛₜₒₚ for ramps r₁, r₂ to be generated in one or more chirp signals 4a, 4b in dependence of said analysis.

As indicated in Figure 1, the vehicle 1 comprises a safety control unit 30 and safety means 31, for example an emergency braking system and/or an alarm signal device. The safety control unit 30 is arranged to control the safety means 31 in dependence of input from the ego vehicle radar system 3.

The present disclosure is not limited to the examples above, but may vary freely within the scope of the appended claims. For example, the ego vehicle radar system 3 may be arranged to tune to and monitor additional static frequencies, or attempt to follow the interference signal 28 in order to confirm its characteristics. This may either be made in a pre-defined way or adaptively on the basis of measurements.

According to some aspects, the observation period could be extended, possibly even extending to the whole period that the ego vehicle radar system 3 is not transmitting. Using multiple observation frequencies may be particularly useful when in an environment comprising multiple such radars.

The frequencies given in the examples are only to be regarded as examples, any suitable frequencies and frequency spans are conceivable.

The ego vehicle radar system 3 may be implemented in any type of vehicle such as cars, trucks and buses as well as boats and aircraft.

The schematics of the ego vehicle radar system 3 are simplified, only showing parts that are considered relevant for an adequate description of the present disclosure. It is understood that the general design of radar systems of this kind is well-known in the art. For example, no devices that are arranged to use the acquired target information is shown, but many different such devices are of course conceivable; for example a warning and/or collision avoidance system.

The number of antenna arrangements, antennas within each antenna arrangement and IF signals may vary.

The ADC arrangement and the DSP arrangement should each one be interpreted as having a corresponding ADC or DSP functionality, and may each be constituted by a plurality of separate components. Alternatively, each ADC arrangement may be comprised in one ADC chip, and each DSP arrangement may be comprised in one DSP chip. The DSP arrangement/arrangements can be combined with the control unit/units.

Each antenna arrangement 13a, 13b; 25a, 25b may for example comprise one or more antennas, and each antenna may be constituted by one antenna element or by an array of antenna elements.

In the example shown, there has only been one receiver channel. Of course, a receiver in this context may be arranged for a plurality of channels.

Generally, the hardware used to generate the radar signal may be active only for part of the cycle period and powered down for the rest of the cycle, i.e. when it is not needed.

Generally, the present disclosure relates to a vehicle radar system 3 comprising at least one transceiver arrangement 10a, 10b and at least one control unit 29, each transceiver arrangement 10a, 10b being arranged for generating and receiving FMCW (Frequency Modulated Continuous Wave) chirp signals in a radar frequency band, comprising ramps r₁, r₂ that each has a start frequency fₛₜₐᵣₜ and a stop frequency fₛₜₒₚ. Said control unit 29 is arranged to:
control at least one transceiver arrangement 10a, 10b to monitor a certain part of the radar frequency band during an observation period;
analyze possible interference signals 28, 5c; and to identify a certain start time t₂ₛₜₐᵣₜ to start sending a cycle of one or more chirp signals 4a, 4b in dependence of said analysis, such that interference from said interference signals 28, 5c is reduced.

According to an example, said control unit 29 is arranged to also control the start frequency fₛₜₐᵣₜ and the stop frequency fₛₜₒₚ for ramps r₁, r₂ in one or more chirp signals 4a, 4b in dependence of said analysis.

According to an example, said certain part of the radar frequency band corresponds to the start frequency fₛₜₐᵣₜ with the addition of a difference frequency Δ.

According to an example, the difference frequency Δ equals a transceiver arrangement IF (Intermediate Frequency) bandwidth.

According to an example, said control unit 29 is arranged to analyze possible interference signals 28, 5c by being arranged to:
- estimate a gradient of the interference signal 28; and/ or
- select a difference frequency Δ such that the ego vehicle radar system 3 is enabled to observe at which frequencies the interference signal 28 appears and re-starts, if it is known that the interference signal 28 is using the same signal frequency and timing as the ego vehicle radar system 3, enabling acquiring a start time of the interference signal 28; and/or
- estimate a time between ramps of the interference signal 28 such that a clock frequency can be acquired relative the own clock frequency.

According to an example, the vehicle radar system 3 is arranged to monitor timing of control signals received from a vehicle data bus 36 or said control unit 29 in order to derive a frequency reference.

Generally, the present disclosure also relates to a method for a vehicle radar system 3 used for generating and receiving FMCW (Frequency Modulated Continuous Wave) chirp signals in a radar frequency band, comprising ramps r₁, r₂ that each has a start frequency fₛₜₐᵣₜ and a stop frequency fₛₜₒₚ.

The method comprises:
32: monitoring a certain part of a radar frequency band during an observation period;
33: analyzing possible interference signals 28, 5c; and
34: identifying a certain start time t₂ₛₜₐᵣₜ to start sending a cycle of one or more chirp signals 4a, 4b in dependence of said analysis, such that interference from said interference signals 28, 5c is reduced.

According to an example, the method further comprises:
35: controlling the start frequency fₛₜₐᵣₜ and the stop frequency fₛₜₒₚ for ramps r₁, r₂ to be generated in one or more chirp signals 4a, 4b in dependence of said analysis.

According to an example, said certain part of the radar frequency band corresponds to the start frequency fₛₜₐᵣₜ with the addition of a difference frequency Δ.

v the difference frequency Δ equals a transceiver arrangement IF (Intermediate Frequency) bandwidth.

According to an example, the method comprises analyzing possible interference signals 28, 5c by:
- estimating a gradient of the interference signal 28; and/ or
- selecting a difference frequency Δ such that the ego vehicle radar system 3 is enabled to observe at which frequencies the interference signal 28 appears and re-starts, if it is known that the interference signal 28 is using the same signal frequency and timing as the ego vehicle radar system 3, enabling acquiring a start time of the interference signal 28; and/or
- estimating a time between ramps of the interference signal 28 such that a clock frequency can be acquired relative the own clock frequency.

According to an example, the method comprises monitoring timing of control signals received from a vehicle data bus 36 or said control unit 29 for deriving a frequency reference.

Embodiments of the invention can be described with reference to the following numbered clauses, with preferred features laid out in the dependent clauses:
1. A vehicle radar system (3) comprising at least one transceiver arrangement (10a, 10b) and at least one control unit (29), each transceiver arrangement (10a, 10b) being arranged for generating and receiving FMCW, Frequency Modulated Continuous Wave, chirp signals in a radar frequency band, comprising ramps (r₁, r₂) that each has a start frequency (fₛₜₐᵣₜ) and a stop frequency (fₛₜₒₚ), **characterized in** that said control unit (29) is arranged to:
   control at least one transceiver arrangement (10a, 10b) to monitor a certain part of the radar frequency band during an observation period;
   analyze possible interference signals (28, 5c); and to identify a certain start time (t₂ₛₜₐᵣₜ) to start sending a cycle of one or more chirp signals (4a, 4b) in dependence of said analysis, such that interference from said interference signals (28, 5c) is reduced.
2. The vehicle radar system (3) according to clause 1, **characterized in** that said control unit (29) is arranged to also control the start frequency (fₛₜₐᵣₜ) and the stop frequency (fₛₜₒₚ) for ramps (r₁, r₂) in one or more chirp signals (4a, 4b) in dependence of said analysis.
3. The vehicle radar system (3) according to any one of the clause 1 or 2, **characterized in** that said certain part of the radar frequency band corresponds to the start frequency (fₛₜₐᵣₜ) with the addition of a difference frequency (Δ).
4. The vehicle radar system (3) according to clause 3, **characterized** in that the difference frequency (Δ) equals a transceiver arrangement IF, Intermediate Frequency, bandwidth.
5. The vehicle radar system (3) according to any one of the clause 3 or 4, **characterized** in that said control unit (29) is arranged to analyze possible interference signals (28, 5c) by being arranged to:
   - estimate a gradient of the interference signal (28); and/ or
   - select a difference frequency (Δ) such that the ego vehicle radar system (3) is enabled to observe at which frequencies the interference signal (28) appears and re-starts, if it is known that the interference signal (28) is using the same signal frequency and timing as the ego vehicle radar system (3), enabling acquiring a start time of the interference signal (28); and/or
   - estimate a time between ramps of the interference signal (28) such that a clock frequency can be acquired relative the own clock frequency.
6. The vehicle radar system (3) according to any one of the previous clauses, **characterized in** that the vehicle radar system (3) is arranged to monitor timing of control signals received from a vehicle data bus (36) or said control unit (29) in order to derive a frequency reference.
7. A method for a vehicle radar system (3) used for generating and receiving FMCW, Frequency Modulated Continuous Wave, chirp signals in a radar frequency band, comprising ramps (r₁, r₂) that each has a start frequency (fₛₜₐᵣₜ) and a stop frequency (fₛₜₒₚ), **characterized in** that the method comprises:
   (32) monitoring a certain part of a radar frequency band during an observation period;
   (33) analyzing possible interference signals (28, 5c); and
   (34) identifying a certain start time (t₂ₛₜₐᵣₜ) to start sending a cycle of one or more chirp signals (4a, 4b) in dependence of said analysis, such that interference from said interference signals (28, 5c) is reduced.
8. The method according to clause 7, **characterized in** that the method further comprises:
   (35) controlling the start frequency (fₛₜₐᵣₜ) and the stop frequency (fₛₜₒₚ) for ramps (r₁, r₂) to be generated in one or more chirp signals (4a, 4b) in dependence of said analysis.
9. The method according to any one of the clause 7 or 8, **characterized** in that said certain part of the radar frequency band corresponds to the start frequency (fₛₜₐᵣₜ) with the addition of a difference frequency (Δ).
10. The method according to clause 9, **characterized in** that the difference frequency (Δ) equals a transceiver arrangement IF, Intermediate Frequency, bandwidth.
11. The method according to any one of the clause 9 or 10, **characterized in** that the method comprises analyzing possible interference signals (28, 5c) by:
   - estimating a gradient of the interference signal (28); and/ or
   - selecting a difference frequency (Δ) such that the ego vehicle radar system (3) is enabled to observe at which frequencies the interference signal (28) appears and re-starts, if it is known that the interference signal (28) is using the same signal frequency and timing as the ego vehicle radar system (3), enabling acquiring a start time of the interference signal (28); and/or
   - estimating a time between ramps of the interference signal (28) such that a clock frequency can be acquired relative the own clock frequency.
12. The method according to any one of the clause 7-11, **characterized in** that the method comprises monitoring timing of control signals received from a vehicle data bus (36) or said control unit (29) for deriving a frequency reference.

## Claims

1. A vehicle radar system (3) comprising at least one transceiver arrangement (10a, 10b) and at least one control unit (29), each transceiver arrangement (10a, 10b) being arranged for generating and receiving FMCW, Frequency Modulated Continuous Wave, chirp signals in a radar frequency band, comprising ramps (r₁, r₂) that each has a start frequency (fₛₜₐᵣₜ) and a stop frequency (fₛₜₒₚ), **characterized in that** said control unit (29) is arranged to:
control at least one transceiver arrangement (10a, 10b) to monitor a certain part of the radar frequency band during an observation period during which a transmitter of the transceiver arrangement is not transmitting;
analyze possible interference signals (28, 5c) including estimating a gradient of the possible interference signals; and
to
identify a certain start time (t₂ₛₜₐᵣₜ) to start sending a cycle of one or more ramps of the chirp signals (4a, 4b) in dependence of said analysis, such that interference from said interference signals (28, 5c) is reduced and to control the start frequency (fₛₜₐᵣₜ) and the stop frequency (fₛₜₒₚ) for the ramps (r₁, r₂) in the one or more chirp signals (4a, 4b) in dependence of said analysis in order to match the gradient.

2. The vehicle radar system (3) according to any one of the claim 1, **characterized in that** said certain part of the radar frequency band corresponds to the start frequency (fₛₜₐᵣₜ) with the addition of a difference frequency (Δ).

3. The vehicle radar system (3) according to claim 2, **characterized in that** the difference frequency (Δ) equals a transceiver arrangement IF, Intermediate Frequency, bandwidth.

4. The vehicle radar system (3) according to any one of the claim 2 or 3, **characterized in that** said control unit (29) is arranged to analyze possible interference signals (28, 5c) by being arranged to:
- select a difference frequency (Δ) such that the ego vehicle radar system (3) is enabled to observe at which frequencies the interference signal (28) appears and re-starts, if it is known that the interference signal (28) is using the same signal frequency and timing as the ego vehicle radar system (3), enabling acquiring a start time of the interference signal (28); and/or
- estimate a time between ramps of the interference signal (28) such that a clock frequency can be acquired relative the own clock frequency.

5. The vehicle radar system (3) according to any one of the previous claims, **characterized in that** the vehicle radar system (3) is arranged to monitor timing of control signals received from a vehicle data bus (36) or said control unit (29) in order to derive a frequency reference.

6. A method for a vehicle radar system (3) used for generating and receiving FMCW, Frequency Modulated Continuous Wave, chirp signals in a radar frequency band, comprising ramps (r₁, r₂) that each has a start frequency (fₛₜₐᵣₜ) and a stop frequency (fₛₜₒₚ), **characterized in that** the method comprises:
(32) monitoring a certain part of a radar frequency band during an observation period during which a transmitter of the transceiver arrangement is not transmitting;
(33) analyzing possible interference signals (28, 5c) including estimating a gradient of the possible interference signals; and
(34) identifying a certain start time (t₂ₛₜₐᵣₜ) to start sending a cycle of one or more ramps of the chirp signals (4a, 4b) in dependence of said analysis, such that interference from said interference signals (28, 5c) is reduced and controlling the start frequency (fₛₜₐᵣₜ) and the stop frequency (fₛₜₒₚ) for the ramps (r₁, r₂) in the one or more chirp signals (4a, 4b) in dependence of said analysis in order to match the gradient.

7. The method according to any one of the claim 6, **characterized in that** said certain part of the radar frequency band corresponds to the start frequency (fₛₜₐᵣₜ) with the addition of a difference frequency (Δ).

8. The method according to claim 7, **characterized in that** the difference frequency (Δ) equals a transceiver arrangement IF, Intermediate Frequency, bandwidth.

9. The method according to any one of the claim 9 or 10, **characterized in that** the method comprises analyzing possible interference signals (28, 5c) by:
- selecting a difference frequency (Δ) such that the ego vehicle radar system (3) is enabled to observe at which frequencies the interference signal (28) appears and re-starts, if it is known that the interference signal (28) is using the same signal frequency and timing as the ego vehicle radar system (3), enabling acquiring a start time of the interference signal (28); and/or
- estimating a time between ramps of the interference signal (28) such that a clock frequency can be acquired relative the own clock frequency.

10. The method according to any one of the claim 6-9, **characterized in that** the method comprises monitoring timing of control signals received from a vehicle data bus (36) or said control unit (29) for deriving a frequency reference.
